# FASCICULE DE BREVET EUROPEEN

(11) **EP 4 066 622 B1**
(45) Date de publication et mention de la délivrance du brevet: **24.01.2024**
(21) Numéro de dépôt: 22163442.1
(22) Date de dépôt: 22.03.2022
(51) Int. Cl.: A01D 78/10

(54) **MACHINE DE FENAISON À CHARIOT SIMPLIFIÉE**
VEREINFACHTE HEUWERBUNGSMASCHINE MIT WAGEN
SIMPLIFIED HAYMAKING MACHINE WITH A CARRIER

(30) Priorité: 25.03.2021 FR 2103008
(43) Date de publication de la demande: 05.10.2022
(73) Titulaire: Kuhn SAS, 67700 Saverne (FR)
(72) Inventeur: MATHIS, Mathieu, 67700 MONSWILLER (FR)
(74) Mandataire: Esch, Esther Evelyne

(56) Documents cités:
- EP-A1- 2 436 260
- EP-A1- 2 499 897
- EP-A2- 0 984 676

## Description

La présente publication se rapporte à une machine agricole de fenaison, particulièrement une faneuse, comportant un châssis en appui sur le sol par le biais d'au moins une roue et destiné à être accouplé à un tracteur pouvant déplacer la machine dans un sens d'avance, la machine (1) comportant un chariot portant une pluralité de rotors, le chariot étant monté pivotant par rapport au châssis autour d'un pivot central orienté transversalement par rapport au sens d'avance, chaque rotor étant entrainé autour d'un axe d'entrainement respectif, et un actionneur leveur articulé au châssis d'une part et au chariot d'autre part pouvant faire pivoter le chariot par rapport au châssis autour du pivot central, la machine pouvant occuper une configuration manoeuvre dans laquelle le chariot est soulevé, ainsi qu'une configuration travail dans laquelle le chariot repose sur le sol par le biais d'au moins un appui.

Le document EP 2 499 897 A1 décrit une machine correspondant à la description ci-dessus. Sur cette machine, le chariot est soulevé par rapport au châssis dans une configuration manoeuvre lorsqu'on souhaite circuler au dessus d'andains sans les déformer et/ou dans l'optique de faire rouler la machine sur route dans une configuration transport, auquel cas certains rotors sont en plus rapprochés du châssis. Le chariot est ainsi monté pivotant à l'arrière du châssis autour d'un pivot central et autour duquel le chariot peut être pivoté par un actionneur leveur pour être soulevé.

Afin de ne pas détériorer le tapis végétal lors de la transposition entre configuration travail et configuration manoeuvre, le chariot est pivoté, depuis la configuration travail, autour d'un axe intermédiaire qui relie le chariot avec un cadre intermédiaire. Dans un second temps, le chariot est pivoté, simultanément avec le cadre intermédiaire, autour du pivot central qui relie le cadre intermédiaire au châssis, aboutissant ainsi à la configuration manoeuvre de la machine.

Un inconvénient de la machine du document EP 2 499 897 A1 réside dans la liaison complexe entre le chariot et le pivot central.

Les documents EP 2 436 260 A1 et EP 0 984 676 A2 décrivent des machines de fenaison connues.

La présente invention a pour but de proposer une machine avec une cinématique simple permettant aussi de ménager le tapis végétal.

A cet effet, une importante caractéristique de l'invention consiste en ce que le pivot central est solidaire du chariot et en ce que la machine comporte un actionneur positionneur pouvant déplacer le pivot central par rapport au châssis afin de modifier la position des axes d'entrainement par rapport au sol.

Une telle caractéristique permet d'articuler le chariot directement sur le châssis autour du pivot central et, lors de la transposition d'une configuration travail à une configuration manoeuvre, d'éloigner du sol la partie frontale des rotors avant le soulèvement du chariot par rapport au châssis, évitant ainsi de détériorer le tapis végétal du sol. Le chariot étant en liaison directe avec le châssis, la machine est dépourvue des châssis intermédiaire et articulation additionnelle, et sa cinématique plus simple.

L'invention sera mieux comprise à la lecture de la description ci-après, d'où ressortiront d'autres avantages, avec référence aux dessins schématiques donnés à titre d'exemple, dans lesquels :

### Brève description des dessins

[Fig. 1] représente une vue de dessus d'un exemple de réalisation d'une machine selon l'invention, attelée à un tracteur et en configuration travail ;
[Fig. 2] représente une vue de détail de la figure 1 ;
[Fig. 3] représente une vue latérale de machine de la figure 1 selon le mode de réalisation préféré, en configuration travail ;
[Fig. 4] représente une vue latérale d'une machine selon une variante de réalisation, en configuration manoeuvre ;
[Fig. 5] représente une vue latérale d'une machine selon l'invention, en configuration intermédiaire ;
[Fig. 6] représente une version simplifiée du schéma hydraulique de la machine selon une autre variante de réalisation, en configuration manoeuvre, dans laquelle l'actionneur positionneur et l'actionneur leveur sont connectés hydrauliquement au tracteur de manière séparée ;
[Fig. 7] représente une version simplifiée du schéma hydraulique d'une machine selon un mode de réalisation alternatif, en configuration travail ;
[Fig. 8] représente une version simplifiée du schéma hydraulique de la figure 7 où la machine est en configuration manoeuvre ;
[Fig. 9] représente un version simplifiée du schéma hydraulique d'une machine selon le mode de réalisatoin préféré, en configuration de travail ; et,
[Fig. 10] représente un vue latérale schématique d'une machine selon l'invention dans différentes situations en configuration travail.

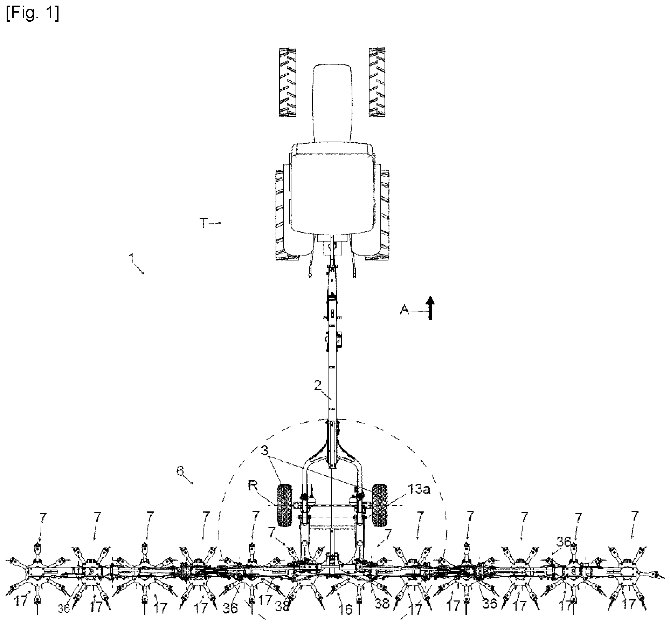

La machine (1) agricole de fenaison, particulièrement une faneuse ainsi que représentée sur la figure 1, comporte un châssis (2) en appui sur le sol (B) par le biais d'au moins une roue (3). La machine (1) est accouplée à un tracteur (T) pouvant la déplacer dans un sens d'avance (A). La machine (1) comporte un chariot (6) portant une pluralité de rotors (7). Le chariot (6) est monté pivotant par rapport au châssis (2) autour d'un pivot central (13) orienté transversalement au sens d'avance (A). Chaque rotor (7) est entrainé autour d'un axe d'entrainement (8) respectif. La machine (1) comporte également un actionneur leveur (18) articulé au châssis (2) d'une part et au chariot (6) d'autre part. L'actionneur leveur (18) peut faire pivoter le chariot (6) par rapport au châssis (2) autour du pivot central (13). La machine (1) peut occuper une configuration manoeuvre dans laquelle le chariot (6) est soulevé, ainsi qu'une configuration travail dans laquelle le chariot (6) repose sur le sol (B) par le biais d'un appui (9).

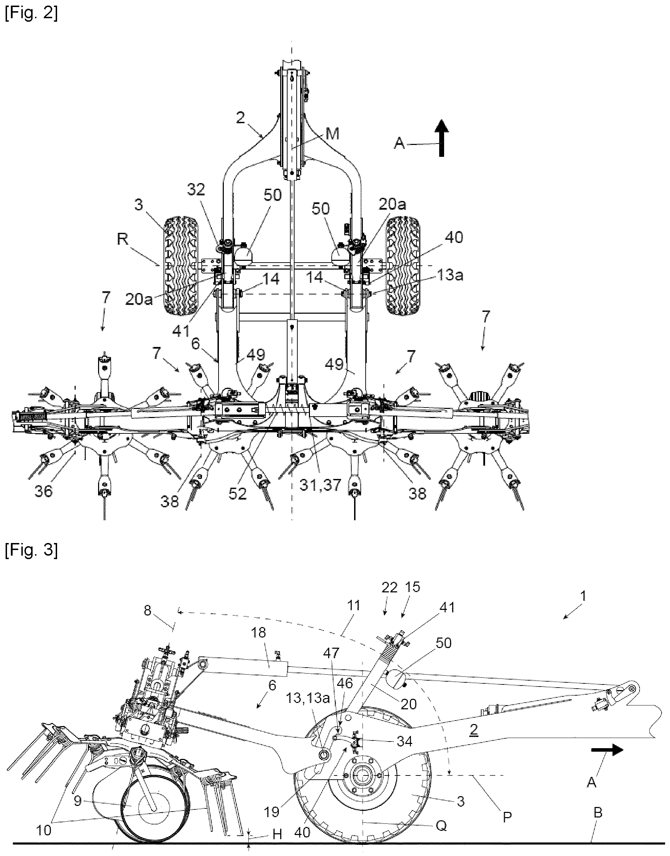

Le sens d'avance (A) est représenté par une flèche épaisse sur les figures. Lors du déplacement dans le sens d'avance (A), l'au moins une roue (3) tourne autour d'un axe roulant (R). L'axe roulant (R) est orthogonal au sens d'avance (A). Le châssis (2), respectivement sa dimension la plus importante, s'étend selon une direction parallèle au sens d'avance (A). Il ressort des figures 1 et 2 que le châssis (2) repose préférentiellement sur deux roues (3).

L'appui (9) est préférentiellement réalisé par au moins une roulette. Il pourrait aussi s'agir d'au moins un patin. De préférence, le chariot (6) prend appui sur le sol (B) par le biais de la roulette respective de chaque rotor (7), en configuration travail. Dans ce document, le sol (B) est défini par la surface sur laquelle reposent la ou les roue(s) (3) du châssis (2) et l'appui (9) du chariot (6) en configuration travail. Chaque rotor (7) comporte des doigts (10) de râtelage. De préférence, chaque doigt (10) est relié à une assiette par une branche. Les branches sont essentiellement orientées radialement par rapport à l'axe d'entrainement (8) respectif. Chaque rotor (7) peut compter de 4 à 8 branches. Le tracteur (T) permet d'animer la machine (1), respectivement les rotors (7). Grâce à leur rotation, les doigts (10) ramassent et soulèvent un produit gisant sur le sol (B), et le projettent vers l'arrière. Le produit est par exemple de l'herbe fauchée. Pour accoupler la machine (1) au tracteur (T), le châssis (2) est équipé d'un dispositif d'accouplement. Le dispositif d'accouplement est de préférence situé à l'extrémité avant du châssis (2) de manière à ne pas rouler sur le produit travaillé par la machine (1).

Le pivot central (13) est de préférence une articulation d'axe central (13a). De préférence, le pivot central (13), respectivement l'axe central (13a), est orthogonal au sens d'avance (A). L'axe central (13a) est en outre horizontal. Il est aussi parallèle à l'axe roulant (R). En configuration travail, le chariot (6), respectivement sa dimension la plus importante, s'étend sensiblement orthogonalement au sens d'avance (A), maximisant la largeur de travail de la machine (1). Sur les figures 1 et 2 notamment, le chariot (6) est situé à l'arrière du châssis (2). Aussi, le pivot central (13) est situé à l'extrémité arrière du châssis (2), autorisant ainsi une plus grande liberté de mouvement du chariot (6) par rapport au châssis (2). De préférence, le pivot central (13) est situé à l'arrière de l'axe roulant (R). On définit un plan de référence (P) orienté parallèlement au sens d'avance (A) et passant par l'axe roulant (R). En vue d'une lecture simplifiée, les positions et orientations font référence au cas où la machine (1) et le tracteur (T) se situent sur un sol (B) plan et horizontal, en configuration travail de la machine (1), à moins d'une mention contraire.

En configuration travail, les axes d'entrainement (8) sont sensiblement verticaux en vue selon l'avance (A). Tous les axes d'entrainement (8) sont compris dans un même plan, au moins en configuration travail. Ainsi qu'il ressort de la figure 3, afin d'améliorer la qualité de râtelage des rotors (7), les axes d'entrainement (8) sont inclinés vers l'avant. Chaque axe d'entrainement (8) forme avec le plan de référence (P) un angle dit de piquage (11). L'angle de piquage (11) est de préférence compris entre 60° et 90° en configuration travail, et plus préférentiellement entre 70° et 80°. La hauteur de râtelage (H) est la distance entre la partie frontale des rotors (7), plus précisément l'extrémité libre du doigt (10) de râtelage avant de chaque rotor (7), et le sol (B). Cette distance permet de ramasser le produit sans endommager le sol ou le tapis végétal.

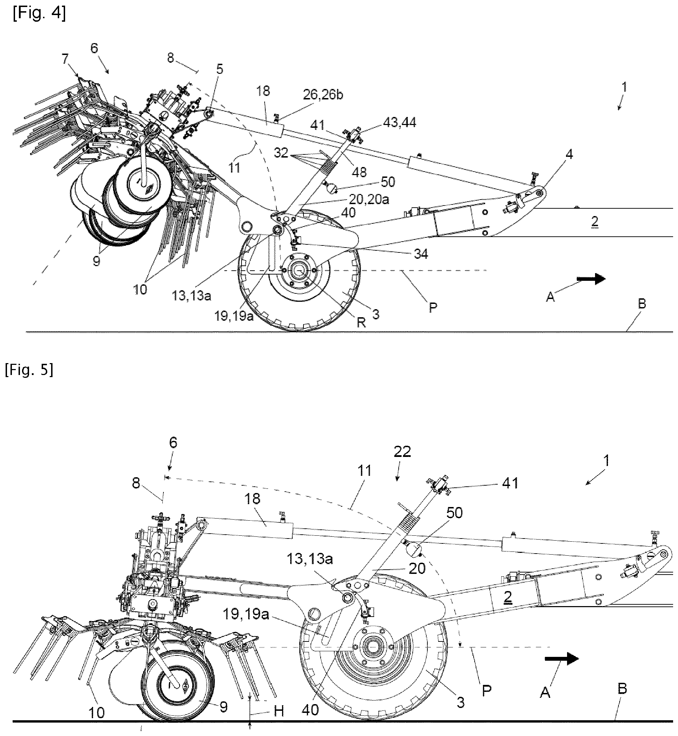

Telle que représentée sur la figure 4, en configuration manoeuvre, l'appui (9) n'est pas en contact avec le sol (B). L'au moins une roue (3) du châssis (2) reste en contact avec le sol (B) en configuration travail et en configuration manoeuvre. Dans la configuration manoeuvre, les axes d'entrainement (8) sont au moins autant inclinés vers l'avant qu'en configuration travail. De préférence, l'angle de piquage (11) est compris entre 30° et 70° en configuration manoeuvre, et plus préférentiellement entre 40° et 60°.

L'actionneur leveur (18) est articulé au châssis (2) par une articulation avant (4). L'articulation avant (4) est située au-dessus du pivot central (13). L'actionneur leveur (18) est articulé au chariot (6) par une articulation arrière (5) également située au-dessus du pivot central (13). Une modification de la longueur de l'actionneur leveur (18) implique le pivotement du chariot (6) autour du pivot central (13).

L'axe de l'articulation avant (4) est parallèle à l'axe central (13a). L'axe de l'articulation avant (4) est fixe par rapport au châssis (2) et par rapport à l'actionneur leveur (18). L'axe de l'articulation arrière (5) est également parallèle à l'axe central (13a). L'axe de l'articulation arrière (5) est fixe par rapport au chariot (6) et par rapport à l'actionneur leveur (18).

Selon l'invention, le pivot central (13) est solidaire du chariot (6). Le chariot (6) est ainsi directement articulé avec le châssis (2) autour du pivot central (13). La machine (1) selon l'invention ne nécessitant ni pièce intermédiaire ni articulation additionnelle entre le châssis (2) et le chariot (6) présente une cinématique avantageusement simple.

Toujours selon l'invention, la machine (1) comporte un actionneur positionneur (20) permettant de déplacer le pivot central (13) par rapport au châssis (2) afin de modifier la position des axes d'entrainement (8). L'actionneur positionneur (20) permet donc de modifier l'angle de piquage (11). L'angle de piquage (11) ayant une influence sur la hauteur de râtelage (H), l'actionneur positionneur (20) peut ainsi éloigner du sol (B) la partie frontale des rotors (7). L'actionneur positionneur (20) peut notamment soulever la partie frontale des rotors (7) avant que le chariot (6) ne soit pivoté vers le haut par l'actionneur leveur (18). Ainsi, lors de la transposition entre la configuration travail et la configuration manoeuvre, les doigts (10) ne risquent pas de piquer dans le sol (B). Le tapis végétal du sol (B) est préservé.

En déplaçant le pivot central (13), l'actionneur positionneur (20) modifie l'angle de piquage (11) et par conséquent la hauteur de râtelage (H). L'actionneur positionneur (20) permet notamment de transposer la machine (1) de la configuration travail à une configuration intermédiaire dans laquelle la hauteur de râtelage (H) est plus importante qu'en configuration travail. Dans la configuration intermédiaire représentée sur la figure 5, le pivot central (13) est plus haut qu'en configuration travail. Dans cette configuration intermédiaire, les axes d'entrainement (8) sont sensiblement verticaux.

L'actionneur positionneur (20) est de préférence articulé au châssis (2) d'une part et au chariot (6) d'autre part. L'actionneur positionneur (20) est articulé sur le châssis (2) par une articulation intérieure (35). L'axe de l'articulation intérieure (35) est fixe par rapport au châssis (2). L'actionneur positionneur (20) est articulé directement sur le pivot central (13) autour de l'axe central (13a). L'actionneur positionneur (20) est distinct de l'actionneur leveur (18), permettant avantageusement de les actionner indépendamment.

Afin de guider le déplacement du pivot central (13) par rapport au châssis (2), une glissière (19) est réalisée dans le châssis (2). De préférence, la glissière (19) est majoritairement linéaire en vue latérale. Elle pourrait cependant être courbe en vue latérale. La glissière (19), respectivement sa longueur, présente au moins une composante verticale. Le pivot central (13) est monté pivot glissant dans la glissière (19). L'actionnement de l'actionneur positionneur (20), respectivement une modification de sa longueur, implique ainsi le déplacement du pivot central (13) au moins selon une composante verticale (voir figures 3 et 4) par rapport au châssis (2).

L'axe de l'articulation intérieure (35) est de préférence parallèle à l'axe central (13a). Afin de minimiser la longueur de l'actionneur positionneur (20), l'articulation intérieure (35) est située aux alentours de la glissière (19). De sorte que le pivot central (13) se déplace sur toute la longueur de la glissière (19), l'articulation intérieure (35) est située au-dessus de la glissière (19). Aussi, l'actionneur positionneur (20) s'étend essentiellement au dessus du châssis (2), évitant son contact avec le sol (B) et le produit.

De manière simple, le pivot central (13) est fixe par rapport au chariot (6). Il est par exemple soudé au chariot (6). Le pivot central (13) est préférentiellement situé à l'avant du chariot (6). Il est de plus décalé selon le sens d'avance (A), en vue latérale, par rapport aux points d'appui des roulettes (9). Le déplacement du pivot central (13) vers le haut par rapport au châssis (2) implique un déplacement vers le haut de l'avant du chariot (6), modifiant ainsi la hauteur de râtelage (H).

L'actionneur leveur (18) permet la transposition entre la configuration intermédiaire et la configuration manoeuvre. De préférence, pour transposer la machine (1) de la configuration intermédiaire à la configuration manoeuvre, la longueur de l'actionneur leveur (18) est raccourcie. Le chariot (6) pivote alors vers le haut par rapport au châssis (2) autour du pivot central (13) jusqu'à la configuration manoeuvre. L'actionneur leveur (18) est réalisé par au moins un vérin.

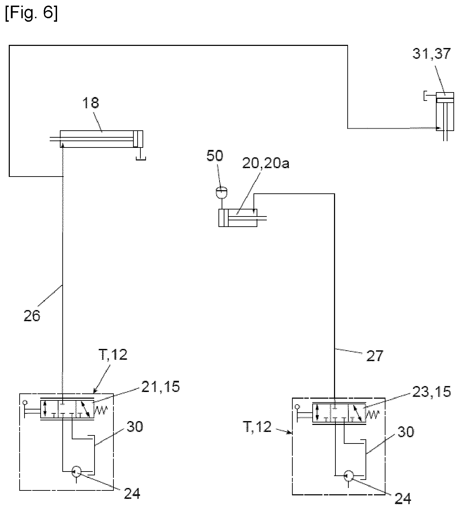

Ainsi qu'il ressort de la figure 6, l'actionneur leveur (18) est connecté à une conduite primaire (26). Il est translatif et hydraulique. Il est de préférence simple effet. Le tracteur (T) comporte notamment une pompe (24) hydraulique et un réservoir (30). Le tracteur (T) comporte également au moins un distributeur (21, 23). Lorsque la conduite primaire (26) est connectée à la pompe (24), l'actionneur leveur (18) est actionné et fait pivoter le chariot (6) autour du pivot central (13) vers le haut.

L'actionneur positionneur (20) est réalisé par au moins un vérin positionneur (20a). L'actionneur positionneur (20) est connecté à une conduite secondaire (27). Le ou chaque vérin positionneur (20a) est de préférence hydraulique et translatif. Lorsque la conduite secondaire (27) est connectée à la pompe (24), l'actionneur positionneur (20) est actionné et déplace le pivot central (13) vers le haut par rapport au châssis (2).

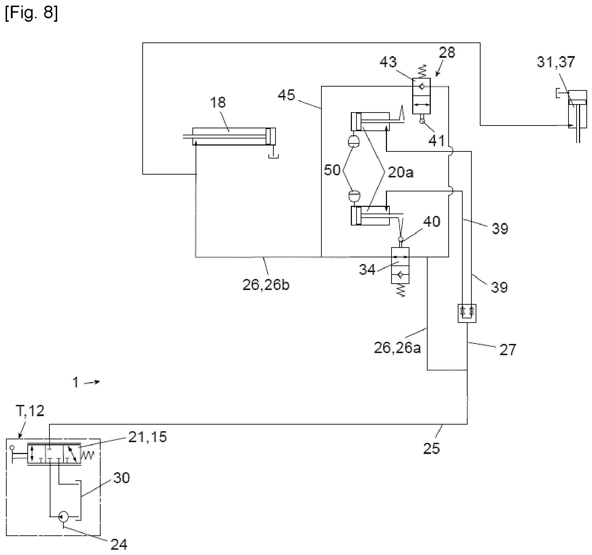

Ainsi qu'il ressort de la figure 8, une conduite principale (25) connecte le tracteur (T) à la conduite primaire (26) et à la conduite secondaire (27). Préférentiellement la conduite principale (25) est connectée au tracteur (T) via un seul distributeur (21), permettant avantageusement de réduire le nombre nécessaire de distributeurs (21, 23) au fonctionnement de la machine (1).

Il ressort de ce qui précède qu'une commande (15) permet d'actionner simultanément l'actionneur leveur (18) et l'actionneur positionneur (20). De préférence, la commande (15) est réalisée par un distributeur (21) connecté à la conduite principale (25). Dans la variante de réalisation représentée sur la figure 6, la commande (15) est par exemple un boitier électronique permettant d'actionner simultanément le distributeur (21) relié à l'actionneur leveur (18) et le distributeur (23) relié à l'actionneur positionneur (20).

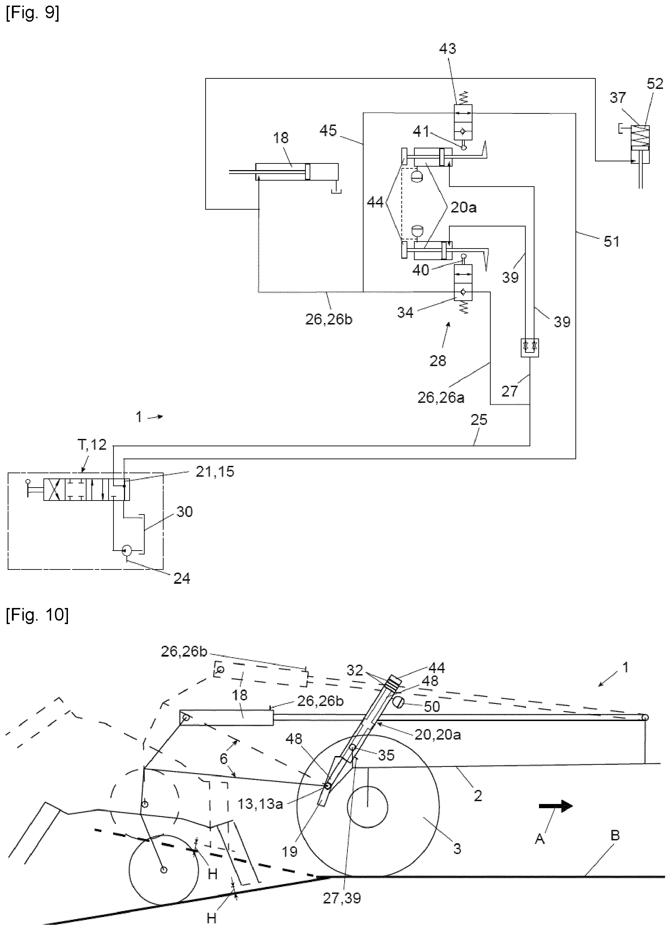

Le châssis (2) est de préférence symétrique selon un plan médian (M), ainsi qu'il ressort de la figure 1. Afin de réduire le risque de mise en oblique du chariot (6) par rapport à un plan perpendiculaire au sens d'avance (A), le chariot (6) comporte préférentiellement deux bras (49) de part et d'autre du plan médian (M), ainsi qu'il ressort de la figure 2. Les bras (49) sont parallèles au sens d'avance (A) en vue de dessus. De préférence, le pivot central (13) est réalisé par deux broches (14) distinctes, chacune située à l'extrémité avant d'un bras (49). Chaque broche (14) est montée dans une ouverture oblongue (19a) respective de la glissière (19). L'actionneur positionneur (20) est alors réalisé par deux vérins positionneur (20a). De préférence, chaque broche (14) est directement articulée sur un vérin positionneur (20a) respectif connecté à une conduite ramifiée (39) respective. La conduite secondaire (27) connecte alors chaque conduite ramifiée (39) à la conduite principale (25). Afin d'assurer un effort identique des vérins positionneur (20a), notamment pour compenser une pression différente entre les accumulateurs d'énergie (50), les deux accumulateurs d'énergie (50) sont reliés par une conduite hydraulique. Cette conduite hydraulique est représentée en pointillés sur la figure 9. Dans une variante de réalisation, le chariot (6) est articulé avec le châssis (2) autour d'une unique broche et l'actionneur positionneur (20) est situé sur le plan médian (M) ou proche de ce dernier.

Sur la figure 10 sont représentées différentes positions du chariot (6) par rapport au châssis (2). Sur la représentation en traits continus, le chariot (6) est plus bas que le châssis (2). Sur la représentation en pointillés, le chariot (6) est plus haut que le châssis (2). Ainsi que représenté sur cette figure 10, au moins en configuration travail, la longueur de l'actionneur leveur (18) peut avantageusement varier, le chariot (6) adaptant ainsi automatiquement sa position par rapport au châssis (2) en fonction des irrégularités du sol (B). A cet effet, en configuration travail, la conduite primaire (26) est connectée au réservoir (30). Cette adaptation du chariot (6) en configuration travail permet un meilleur suivi de terrain des rotors (7) et évite que ceux-ci, respectivement leurs doigts (10), ne détériorent pas le tapis végétal.

Afin d'assurer une hauteur de râtelage (H) constante malgré les variations de longueur de l'actionneur leveur (18), en configuration travail, la machine (1) comporte un moyen de blocage (22) maintenant l'actionneur positionneur (20) à une longueur constante.

Le moyen de blocage (22) comprend une butée basse permettant de bloquer le déplacement du pivot central (13) vers le bas en configuration travail. Dans le mode de réalisation préféré, la butée basse du moyen de blocage (22) est réalisée par des cales (32) limitant l'allongement de l'actionneur positionneur (20). Le moyen de blocage (22) comprend également une butée haute permettant de bloquer le déplacement du pivot central (13) vers le haut en configuration travail. Dans le mode de réalisation préféré, l'actionneur positionneur (20) est double effet, et la butée haute du moyen de blocage (22) est réalisée par un accumulateur d'énergie (50) hydraulique connecté à l'actionneur positionneur (20). L'accumulateur d'énergie (50) est de préférence relié à l'actionneur positionneur (20) de sorte à exercer un effort vers le bas sur le pivot central (13). En configuration travail, le moyen de blocage (22) maintient ainsi le pivot central (13) fixe en translation par rapport au châssis (2). Afin de permettre à l'utilisateur de régler la hauteur de râtelage (H), notamment selon si la surface du sol (B) à travailler est plane ou si elle présente d'importantes irrégularités, la position du pivot central (13) par rapport au châssis (2) en configuration travail est réglable. Le réglage de la hauteur de râtelage (H) permet également de compenser l'usure des doigts (10) et de s'adapter aux différentes hauteurs du dispositif d'accouplement du tracteur (T). La butée basse du moyen de blocage (22) est réglée en modifiant le nombre de cales (32). Préférentiellement, on ajoute ou enlève des cales (32) lorsque l'actionneur positionneur (20) n'est pas rétracté, par exemple en configuration manoeuvre (figure 4).

Le fait que le pivot central (13), respectivement l'axe central (13a), est fixe par rapport au châssis (2) en configuration travail permet de conserver une hauteur de râtelage (H) sensiblement constante même sur sol irrégulier, ainsi qu'il ressort de la figure 10. En configuration travail, le moyen de blocage (22) empêche donc une variation de la longueur de l'actionneur positionneur (20).

Le ou chaque vérin positionneur (20a) comprend une tige (48) et un cylindre. En vue de faciliter le réglage de la position du pivot central (13) par cales (32), la tige (48) traverse le cylindre du ou de chaque vérin positionneur (20a) de part et d'autre. La tige (48) du ou de chaque vérin positionneur (20a) est articulée au pivot central (13) selon l'axe central (13a). Le cylindre du ou de chaque vérin positionneur (20a) est articulé au châssis (2) par l'articulation intérieure (35). A l'extrémité de la tige (48) opposée à l'axe central (13a) est fixé un support (44) avec la tige (48). En configuration travail, les cales (32) sont coincées entre ce support (44) et le cylindre du ou de chaque vérin positionneur (20a), empêchant ainsi son allongement.

Dans la variante de réalisation représentée sur la figure 6, l'actionneur leveur (18) et l'actionneur positionneur (20) sont connectés à un distributeur (21, 23) respectif du tracteur (T). Dans cette variante, le moyen de blocage (22) peut être réalisé par le distributeur (23) qui est connecté à l'actionneur positionneur (20) et qui est fermé dans la configuration travail. Afin de transposer la machine (1) de la configuration travail à la configuration manoeuvre, l'utilisateur doit d'abord actionner le distributeur (23) connecté à l'actionneur positionneur (20) et ensuite le distributeur connecté à l'actionneur leveur (18). Dans cette variante de réalisation, l'utilisateur doit respecter l'ordre d'actionnement des actionneur leveur (18) et actionneur positionneur (20) afin de ne pas détériorer le tapis végétal du sol (B) à chaque transposition entre configuration travail et configuration manoeuvre.

Pour transposer la machine (1) de la configuration travail (figure 3) à la configuration manoeuvre (figure 4), la pompe (24) est connectée à la conduite principale (25). Pour connecter la conduite principale (25) à la pompe (24), on actionne la commande (15). Afin d'éviter automatiquement la détérioration du tapis végétal, la machine (1) comporte un système de séquencement (28) configuré pour empêcher le pivotement du chariot (6) vers le haut autour du pivot central (13) lorsque le pivot central (13) est dans une position de déclenchement ou au-dessus (de la position de déclenchement). La position de déclenchement est une position du pivot central (13) par rapport au châssis (2) dans laquelle le pivot central (13) est plus haut qu'en configuration travail. Préférentiellement, le système de séquencement (28) comporte un premier capteur (40) pour détecter lorsque le pivot central (13) est dans la position dite de déclenchement ou au-dessus.

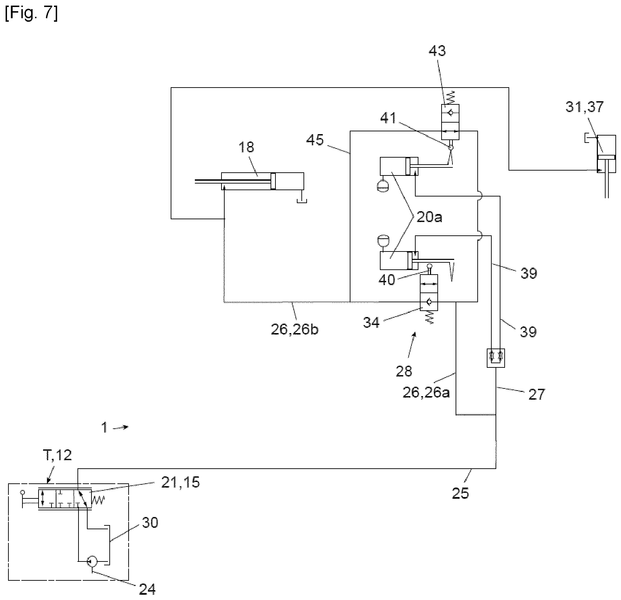

Préférentiellement, le premier capteur (40) est un levier permettant d'ouvrir et fermer une valve de séquencement (34) hydraulique. La valve de séquencement (34) est montée sur la conduite primaire (26). Ainsi que représenté sur les figures 7 à 9, la valve de séquencement (34) divise alors la conduite primaire (26) en une conduite initiale (26a) et une conduite de prolongement (26b). La conduite initiale (26a) relie la conduite principale (25) à la valve de séquencement (34). La conduite de prolongement (26b) relie, elle, la valve de séquencement (34) à l'actionneur leveur (18). Lorsque le pivot central (13) est en dessous de la position de déclenchement, comme par exemple en configuration travail, la valve de séquencement (34) empêche l'écoulement de fluide depuis la conduite initiale (26a) vers l'actionneur leveur (18), ainsi que représenté sur les figures 7 et 9. Lorsque le pivot central (13) est en position de déclenchement ou au-dessus, ainsi que sur la figure 4, la valve de séquencement (34) est ouverte, tel qu'il ressort de la figure 8. La valve de séquencement (34) fait partie du système de séquencement (28). La valve de séquencement (34) permet d'interdire l'actionnement de de l'actionneur leveur (18) lorsque le pivot central (13) n'est pas dans la position de déclenchement.

Dans la configuration intermédiaire, le pivot central (13) est en position de déclenchement. Préférentiellement, en position de déclenchement, le pivot central (13) est en haut de la glissière (19). Préférentiellement, dans une configuration transport de la machine (1), le pivot central (13) est aussi en position de déclenchement. Dans la configuration transport (non représentée), la dimension de la machine (1) selon l'axe roulant (R) est diminuée. Dans cette configuration transport, les appuis (9) sont éloignés du sol (B), et de préférence, les rotors (7) rapprochés du châssis (2) par pivotement.

Lorsque la conduite principale (25) est reliée à la pompe (24), l'actionneur positionneur (20) est ainsi allongé dans un premier temps, et ce jusqu'à la position de déclenchement du pivot central (13) qui provoque alors l'ouverture de la valve de séquencement (34) et relie hydrauliquement la pompe (24) à l'actionneur leveur (18), l'actionneur leveur (18) étant alors rétracté dans un deuxième temps. La machine (1) est alors en configuration manoeuvre. Grâce au système de séquencement (28), l'avant du chariot (6) et la partie frontale des rotors (7) sont ainsi automatiquement éloignés du sol (B) jusqu'à la configuration intermédiaire avant d'être pivotés vers le haut autour du pivot central (13) par rapport au châssis (2). Une seule commande (15) est avantageusement nécessaire pour transposer la machine (1) de la configuration travail à la configuration manoeuvre tout en ménageant le tapis végétal du sol (B) lors de cette transposition. De plus, l'utilisateur n'a pas besoin de penser à l'ordre d'actionnement des actionneurs positionneur (20) et leveur (18).

Afin d'autoriser l'utilisateur à décider à quel moment le soulèvement du chariot (6) se produit par rapport au soulèvement de la partie frontale des rotors (7), la position de déclenchement pourrait être réglable, par exemple en réglant ou déplaçant le premier capteur (40). L'utilisateur pourrait ainsi choisir entre rapidité de la transposition de la configuration travail vers la configuration manoeuvre, et une meilleure préservation du tapis végétal du sol (B).

De préférence, le système de séquencement (28) comporte un deuxième capteur (41) configuré pour détecter lorsque la machine (1) est en configuration travail. Dans le mode de réalisation alternatif des figures 7 et 8, le deuxième capteur (41) est un interrupteur permettant de détecter lorsque les cales (32), ou, le cas échéant, le cylindre d'un, de chaque, ou du vérin positionneur (20a), sont en contact avec le support (44). Le premier capteur (40) et le deuxième capteur (41) pourraient aussi être réalisés en un seul un capteur de position détectant la position du piston du ou de chaque vérin positionneur (20a).

Dans le mode de réalisation alternatif, le deuxième capteur (41) permet d'ouvrir et fermer la valve d'adaptation (43) montée en dérivation de la valve de séquencement (34). La valve de séquencement (34) fait préférentiellement partie du système de séquencement (28). La valve d'adaptation (43) est montée sur une conduite tertiaire (45) branchée aux bornes de la valve de séquencement (34). La conduite tertiaire (45) est ainsi connectée d'une part à la conduite initiale (26a), et d'autre part à la conduite de prolongement (26b). Tel que représenté sur la figure 7, la valve d'adaptation (43) est ouverte lorsque la machine (1) est en configuration travail (figure 3), autorisant une modification de la longueur de l'actionneur leveur (18). Le pivotement du chariot (6) autour du pivot central (13) est ainsi avantageusement libre en configuration travail. Dans la configuration travail, ainsi que représenté sur la figure 7, la conduite principale (25) est reliée au réservoir (30). Dans le circuit de la figure 7, aucune conduite n'est sous pression. En configuration travail, le chariot (2) peut ainsi suivre les irrégularités du sol (B), et avantageusement éviter de détériorer le tapis végétal ou de laisser du produit non râtelé lorsque la machine (1) est dotée d'une valve de séquencement (34), améliorant ainsi la qualité de travail de la machine (1).

Telle que représentée sur la figure 8, lorsque la machine (1) n'est pas en configuration travail, la valve d'adaptation (43) empêche l'écoulement de fluide de la conduite tertiaire (45) vers l'actionneur leveur (18). Le système de séquencement (28) est alors configuré pour empêcher le pivotement du chariot (6) vers le haut autour du pivot central (13) lorsque le pivot central (13) est situé entre sa position en configuration travail et sa position de déclenchement. Lorsque la machine (1) est en configuration manoeuvre, transport ou intermédiaire, telle que sur la figure 8 par exemple, le circuit hydraulique est sous pression, contrairement à la configuration travail.

Selon une variante de réalisation, le système de séquencement (28) est réalisé par un boitier électronique qui actionne l'actionneur positionneur (20), et après une temporisation, actionne l'actionneur leveur (18) lors de la transposition de la configuration travail à la configuration manoeuvre. Lors de la transposition de la configuration manoeuvre à la configuration travail, le boitier électronique actionne dans un premier temps l'actionneur leveur (18), et, après une temporisation, actionne l'actionneur positionneur (20).

Lors de la transposition de la machine (1) de la configuration travail à la configuration manoeuvre, dès que le deuxième capteur (41) détecte que la machine (1) n'est plus en configuration travail, le système de séquencement (28) empêche l'actionnement de l'actionneur leveur (18) et le pivotement vers le haut du chariot (6) autour du pivot central (13). Lorsque la conduite principale (25) est connectée à la pompe (24), l'actionneur positionneur (20) est, lui, toujours connecté à la pompe (24). Lorsque le pivot central (13) est situé entre sa position en configuration travail et sa position de déclenchement, et que la conduite principale (25) est connectée à la pompe (24), l'actionneur positionneur (20) continue d'être actionné et l'avant du chariot (6) soulevé. Une fois la machine (1) en configuration intermédiaire, la valve de séquencement (34) est ouverte provoquant l'actionnement de l'actionneur leveur (18) et le pivotement du chariot (6) vers le haut autour du pivot central (13). Lorsque l'actionneur leveur (18) présente son allongement minimum, la machine (1) est en configuration manoeuvre, tel que représenté sur la figure 4.

La cinématique de la machine (1) décrite ci-dessus est telle que la rétractation de l'actionneur positionneur (20) implique l'allongement de l'actionneur leveur (18). Les efforts des actionneurs leveur (18) et positionneur (20) sont donc antagonistes lorsqu'on configuration travail, la conduite principale (25) est connectée à la pompe (24) jusqu'à ce que le deuxième capteur (41) détecte que la machine (1) n'est plus en configuration travail.

Selon une caractéristique intéressante de l'invention, il est prévu que l'extrémité basse de la glissière (19) soit plus éloignée d'un plan droit (Q) orthogonal au sens d'avance (A) et situé devant la glissière (19) que l'extrémité haute de la glissière (19). Cette caractéristique permet de réduire les efforts antagonistes des actionneurs leveur (18) et positionneur (20) lors de l'actionnement de la commande (15) en configuration travail. Le déplacement du pivot central (13) vers le haut implique avantageusement une variation moindre de la longueur de l'actionneur leveur (18), diminuant ainsi l'antagonisme de leurs efforts. La transposition entre la configuration travail et la configuration manoeuvre implique ainsi avantageusement moins de contrainte. Elle est aussi plus fluide et plus rapide. Le plan droit (Q) passe préférentiellement par l'axe roulant (R). Dans une variante non représentée, le plan droit (Q) passe par l'articulation avant (4). Le plan droit (Q) est également orthogonal au plan de référence (P) en vue latérale. Dans la variante de réalisation de la figure 4, la glissière (19) est orientée verticalement.

Dans le mode de réalisation préféré, la glissière (19) est rectiligne, et de préférence, inclinée vers l'avant. Ainsi que représenté sur la figure 3, la glissière (19), respectivement sa longueur, peut être orientée de manière sensiblement parallèle à au moins un axe d'entrainement (8) en configuration travail.

Afin de réduire les efforts antagonistes des actionneurs leveur (18) et positionneur (20) lors de l'actionnement de la commande (15) en configuration travail, l'actionneur leveur (18) est connecté au tracteur (T) et à un récepteur hydraulique (31). Un récepteur hydraulique (31) est par exemple un vérin ou un accumulateur de pression hydraulique. Grâce au récepteur hydraulique (31), même si les actionneurs leveur (18) et positionneur (20) sont actionnés en même temps, le fluide sortant de l'actionneur leveur (18) est transférée vers le récepteur hydraulique (31), permettant avantageusement une transposition plus rapide et plus fluide entre la configuration travail et la configuration manoeuvre.

Ainsi que visible sur la figure 1, le chariot (6) comporte un tronçon central (16) avec lequel sont articulés, de chaque côté du tronçon central (16), plusieurs tronçons latéraux (17). Sur le tronçon central (16) sont montés deux rotors (7) centraux, chacun entrainé autour d'un axe d'entrainement (8) respectif. Sur chaque tronçon latéral (17) sont montés un ou deux rotors (7) latéraux, chacun entrainé autour d'un axe d'entrainement (8) respectif. Les tronçons latéraux (17) sont articulés au tronçon central (16) au moyen d'axes d'articulation centraux (38). Les tronçons latéraux (17) sont articulés entre eux au moyen d'axes d'articulation (36). En configuration travail, les axes d'articulation centraux (38) sont sensiblement parallèles au sens d'avance (A) en vue de dessus. Ils sont perpendiculaires aux axes d'entrainement (8), au moins en vue latérale. Les axes d'articulation (36) sont sensiblement parallèles aux axes d'articulation centraux (38) en configuration travail.

Il ressort de la figure 2, que la machine (1) comporte au moins un vérin tendeur (37) permettant de faire pivoter les tronçons latéraux (17) par rapport au tronçon central (16) autour des axes d'articulation centraux (38). Grâce au vérin tendeur (37), les tronçons latéraux (17) sont maintenus fixes en rotation autour des axes d'articulation centraux (38) en configuration manoeuvre de sorte à éloigner davantage les rotors (7), notamment extérieurs, du sol (B). D'autres moyens et/ou actionneurs permettent d'éviter le pivotement des tronçons latéraux (37) entre eux autour des axes d'articulation (36) en configuration manoeuvre. Le vérin tendeur (37) est hydraulique et translatif. Il est préférentiellement simple effet. Afin d'assurer un râtelage uniforme sur toute la largeur de la machine (1) en configuration de travail, un ressort (52) tend à allonger le vérin tendeur (37), appuyant ainsi les tronçons latéraux (17) contre le sol (B) en configuration de travail.

Selon une autre caractéristique intéressante de l'invention, afin d'éviter lesdits efforts antagonistes des actionneurs leveur (18) et positionneur (20), le vérin tendeur (37) est hydrauliquement connecté à l'actionneur leveur (18). Autrement dit, le récepteur hydraulique (31) est réalisé par le vérin tendeur (37). De préférence, le vérin tendeur (37) est connecté à la conduite primaire (26). Plus précisément, il est connecté à la conduite de prolongement (26b). Ainsi, lorsque les valves de séquencement (34) et d'adaptation (43) sont fermées, les actionneur leveur (18) et vérin tendeur (37) sont isolés hydrauliquement. Lorsque les actionneur leveur (18) et vérin tendeur (37) sont hydrauliquement isolés, et que l'actionneur positionneur (20) déplace le pivot central (13) vers le haut, l'actionneur leveur (18) s'allonge et le vérin tendeur (37) se rétracte. La rétractation, du vérin tendeur (37) faisant pivoter les tronçons latéraux (17) vers le haut, les rotors (7) extérieurs sont rapidement éloignés du sol (B) après l'actionnement de la commande (15), permettant d'éviter de défaire les andains formés plus rapidement.

Avec le mode de réalisation alternatif des figures 7 et 8, les valves (34, 43), étant fermées lorsque le pivot central (13) passe de sa position en configuration travail à sa position de déclenchement, mettent le circuit hydraulique sous pression. L'allongement de l'actionneur leveur (18) simultanément à la rétractation de l'actionneur positionneur (20) implique ainsi un frottement du pivot central (13) avec la glissière (19), pouvant provoquer une usure prématurée de la glissière (19) et/ou du pivot central (13).

Afin d'éviter l'usure prématurée du pivot central (13) et/ou de la glissière (19), notamment en haut de la glissière (19), dans le mode de réalisation préféré représenté sur la figure 9, le deuxième capteur (41) est un levier permettant d'ouvrir et fermer la valve d'adaptation (43). La valve d'adaptation (43) est reliée à la conduite de prolongement (26b) par une conduite tertiaire (45). Dans le mode de réalisation préféré, la valve d'adaptation (43) est d'autre part reliée au réservoir (30) par une conduite quaternaire (51) en configuration de travail. En configuration de travail, afin de permettre au chariot (6) de suivre les irrégularités du sol (B), la valve d'adaptation (43) est ouverte. Dans ce document, lorsqu'une valve (34, 43) est dite « ouverte », elle autorise l'écoulement de fluide dans toutes les directions.

Lorsque la conduite principale (25) est reliée à la pompe (24), l'actionneur positionneur (20) est allongé jusqu'à la position de déclenchement du pivot central (13), ce qui provoque la fermeture de la valve d'adaptation (43) dans le mode de réalisation préféré. Dans le mode de réalisation de la figure 9, la valve d'adaptation (43) interdit l'écoulement de fluide en dehors de l'actionneur leveur (18) lorsque le pivot central (13) est dans la position de déclenchement ou au-dessus. Dans ce mode de réalisation, le circuit hydraulique n'est ainsi pas sous pression lorsque le pivot central (13) passe de sa position en configuration travail à sa position de déclenchement, évitant avantageusement l'usure de la glissière (19) et/ou du pivot central (13).

Pour transposer la machine (1) de sa configuration manoeuvre vers sa configuration travail, la conduite principale (25) est reliée au réservoir (30), préférentiellement grâce à la commande (15). Lors de cette transposition, le poids du chariot (6) va, dans une première phase, entrainer son pivotement vers le bas autour de l'axe central (13a). A cet effet, au moins l'une des valves de séquencement (34) et d'adaptation (43) est unidirectionnelle dans sa configuration fermée. Ainsi qu'il ressort de la figure 7, les valves de séquencement (34) et d'adaptation (43) sont unidirectionnelles de manière à autoriser l'écoulement de fluide de l'actionneur leveur (18) vers la conduite principale (25). Dans une seconde phase, l'accumulateur d'énergie (50) permet de déplacer le pivot central (13) de sa position de déclenchement à sa position en configuration travail.

Ainsi qu'il ressort de la figure 3, la glissière (19) est dotée à son extrémité haute d'un décroché (46) orienté vers l'avant. De la sorte, la glissière (19) présente une surface (47) sur laquelle le pivot central (13) repose lorsque le pivot central (13) se trouve à l'extrémité haute de la glissière (19). Aussi, lorsque la machine (1) est en configuration manoeuvre, le pivot central (13) repose sur la surface (47) du décroché (46). La surface (47) est de préférence horizontale. Dans le décroché (46) le pivot central (13) est dans une position stable. Lors de la transposition de la configuration manoeuvre à la configuration travail, dès que le chariot (6), respectivement l'appui (9), atteint à nouveau le sol (B), la machine (1) est en configuration intermédiaire. Le pivot central (13) sort alors du décroché (46). Le décroché (46) permet ainsi d'éviter que les doigts (10) avant des rotors (7) ne touchent le sol (B) lors de la transposition de la configuration manoeuvre à la configuration travail. Ainsi, le tapis végétal du sol (B) est préservé.

Bien entendu, l'invention n'est pas limitée aux modes ou variantes de réalisation décrit(e)s et représentées aux dessins annexés.

## Revendications

1. Machine (1) agricole de fenaison, particulièrement une faneuse, comportant un châssis (2) en appui sur le sol (B) par le biais d'au moins une roue (3), la machine (1) étant accouplée à un tracteur (T) pouvant la déplacer dans un sens d'avance (A), la machine (1) comportant un chariot (6) portant une pluralité de rotors (7), le chariot (6) étant monté pivotant par rapport au châssis (2) autour d'un pivot central (13) orienté transversalement au sens d'avance (A), chaque rotor (7) étant entrainé autour d'un axe d'entrainement (8) respectif, la machine (1) comportant un actionneur leveur (18) articulé au châssis (2) d'une part et au chariot (6) d'autre part pouvant faire pivoter le chariot (6) par rapport au châssis (2) autour du pivot central (13), la machine (1) pouvant occuper une configuration manoeuvre dans laquelle le chariot (6) est soulevé, ainsi qu'une configuration travail dans laquelle le chariot (6) repose sur le sol (B) par le biais d'un appui (9), machine (1) dans laquelle le pivot central (13) est solidaire du chariot (6), et la machine (1) comporte un actionneur positionneur (20),
machine **caractérisée en ce que** l'actionneur positionneur (20) permet de déplacer le pivot central (13) par rapport au châssis (2) afin de modifier la position des axes d'entrainement (8).

2. Machine selon la revendication 1, **caractérisée en ce qu'**une commande (15) permet d'actionner simultanément l'actionneur leveur (18) et l'actionneur positionneur (20).

3. Machine selon l'une des revendications 1 ou 2, **caractérisée en ce que** l'actionneur leveur (18) est réalisé par au moins un vérin, **en ce que** l'actionneur positionneur (20) est réalisé par au moins un vérin positionneur (20a) et **en ce qu'**une conduite principale (25) connecte le tracteur (T) à une conduite primaire (26) connectée à l'actionneur leveur (18) et à une conduite secondaire (27) connectée à l'actionneur positionneur (20).

4. Machine selon l'une des revendications 1 à 3, **caractérisée en ce qu'**en configuration travail, le pivotement du chariot (6) autour du pivot central (13) est libre, et **en ce qu'**un moyen de blocage (22) maintient le pivot central (13) fixe en translation par rapport au châssis (2).

5. Machine selon l'une des revendications 1 à 4, **caractérisée en ce qu'**elle comporte un système de séquencement (28) configuré pour empêcher le pivotement du chariot (6) vers le haut autour du pivot central (13) lorsque le pivot central (13) est dans une position de déclenchement ou au-dessus.

6. Machine selon la revendication 5, **caractérisée en ce que** le système de séquencement (28) est configuré pour empêcher le pivotement du chariot (6) vers le haut autour du pivot central (13) lorsque le pivot central (13) est situé entre sa position en configuration travail et sa position de déclenchement.

7. Machine selon l'une des revendications 1 à 6, **caractérisée en ce qu'**une glissière (19) est réalisée dans le châssis (2) afin de guider le déplacement du pivot central (13) par rapport au châssis (2), l'extrémité basse de la glissière (19) étant plus éloignée d'un plan droit (Q) orthogonal au sens d'avance (A) et situé devant la glissière (19) que son extrémité haute.

8. Machine selon la revendication 7, **caractérisée en ce que** la glissière (19) est dotée à son extrémité haute d'un décroché (46) orienté vers l'avant.

9. Machine selon l'une des revendications 1 à 8, **caractérisée en ce que** l'actionneur leveur (18) est connecté au tracteur (T) et à un récepteur hydraulique (31).

10. Machine selon la revendication 9, **caractérisée en ce que** le chariot (6) comporte un tronçon central (16) avec lequel sont articulés, de chaque côté dudit tronçon central (16), plusieurs tronçons latéraux (17) au moyen d'axes d'articulation centraux (38), **en ce qu'**au moins un vérin tendeur (37) permet de faire pivoter les tronçons latéraux (17) par rapport au tronçon central (16) autour desdits axes d'articulation centraux (38), et **en ce que** le récepteur hydraulique (31) est réalisé par le vérin tendeur (37). 1

## Patentansprüche

1. Landwirtschaftliche Heuwerbungsmaschine (1), insbesondere ein Heuwender, mit einem Rahmen (2), der über mindestens ein Rad (3) auf dem Boden (B) abgestützt ist, wobei die Maschine (1) an einen Traktor (T) angekuppelt wird, der sie in einer Vorschubrichtung (A) bewegen kann, wobei die Maschine (1) einen Wagen (6) umfasst, der eine Vielzahl von Rotoren (7) trägt, wobei der Wagen (6) in Bezug auf den Rahmen (2) um einen zentralen Zapfen (13) schwenkbar montiert ist, der quer zur Vorschubrichtung (A) ausgerichtet ist, wobei jeder Rotor (7) um eine entsprechende Antriebsachse (8) angetrieben wird, wobei die Maschine (1) einen Hebesteller (18) umfasst, der einerseits am Rahmen (2) und andererseits am Wagen (6) angelenkt ist und den Wagen (6) in Bezug auf den Rahmen (2) um den zentralen Zapfen (13) schwenken lassen kann, wobei die Maschine (1) eine Vorgewende Konfiguration, in der der Wagen (6) angehoben ist, sowie eine Arbeitskonfiguration, in der der Wagen (6) über eine Auflage (9) auf dem Boden (B) aufliegt, einnehmen kann, Maschine (1) bei welcher der zentrale Zapfen (13) fest mit dem Wagen (6) verbunden ist und die Maschine (1) umfasst einen Positioniersteller (20),
Maschine **dadurch gekennzeichnet, dass** der Positioniersteller (20) es ermöglicht, den zentralen Zapfen (13) in Bezug auf den Rahmen (2) zu bewegen, um die Position der Antriebsachsen (8) zu verändern.

2. Maschine nach Anspruch 1, **dadurch gekennzeichnet, dass** ein Betätigungselement (15) die gleichzeitige Betätigung des Hebestellers (18) und des Positionierstellers (20) ermöglicht.

3. Maschine nach einem der Ansprüche 1 oder 2, **dadurch gekennzeichnet, dass** der Hebesteller (18) durch mindestens einen Zylinder ausgeführt wird, dass der Positioniersteller (20) durch mindestens einen Positionierzylinder (20a) ausgeführt wird und, dass eine Hauptleitung (25) den Traktor (T) mit einer Primärleitung (26), die mit dem Hebesteller (18) verbunden ist, und mit einer Sekundärleitung (27), die mit dem Positioniersteller (20) verbunden ist, verbindet.

4. Maschine nach einem der Ansprüche 1 bis 3, **dadurch gekennzeichnet, dass** in der Arbeitskonfiguration das Schwenken des Wagens (6) um den zentralen Zapfen (13) frei ist und, dass ein Verriegelungsmittel (22) den zentralen Zapfen (13) fest in der Translation in Bezug auf den Rahmen (2) hält.

5. Maschine nach einem der Ansprüche 1 bis 4, **dadurch gekennzeichnet, dass** sie ein Sequenziersystem (28) umfasst, das ausgestaltet ist, um das Schwenken des Wagens (6) nach oben um den zentralen Zapfen (13) zu verhindern, wenn sich der zentrale Zapfen (13) in einer Triggerstellung oder darüber befindet.

6. Maschine nach Anspruch 5, **dadurch gekennzeichnet, dass** das Sequenziersystem (28) ausgestaltet ist, um zu verhindern, dass der Wagen (6) um den zentralen Zapfen (13) nach oben schwenkt, wenn sich der zentrale Zapfen (13) zwischen seiner Position in der Arbeitskonfiguration und seiner Triggerstellung befindet.

7. Maschine nach einem der Ansprüche 1 bis 6, **dadurch gekennzeichnet, dass** im Rahmen (2) eine Gleitschiene (19) ausgebildet ist, um die Bewegung des zentralen Zapfens (13) in Bezug auf den Rahmen (2) zu führen, wobei das untere Ende der Gleitschiene (19) weiter von einer geraden Ebene (Q) entfernt ist, die orthogonal zur Vorschubrichtung (A) verläuft und vor der Gleitschiene (19) angeordnet ist, als ihr oberes Ende.

8. Maschine nach Anspruch 7, **dadurch gekennzeichnet, dass** die Gleitschiene (19) an ihrem oberen Ende mit einem nach vorne gerichteten Absatz (46) versehen ist.

9. Maschine nach einem der Ansprüche 1 bis 8, **dadurch gekennzeichnet, dass** der Hebesteller (18) mit dem Traktor (T) und einem hydraulischen Empfänger (31) verbunden ist.

10. Maschine nach Anspruch 9, **dadurch gekennzeichnet, dass** der Wagen (6) einen Mittelabschnitt (16) umfasst, mit dem auf jeder Seite des Mittelabschnitts (16) mehrere Seitenabschnitte (17) mittels Mittelgelenkachsen (38) gelenkig verbunden sind, dass mindestens ein Spannzylinder (37) es ermöglicht, die Seitenabschnitte (17) in Bezug auf den Mittelabschnitt (16) um die Mittelgelenkachsen (38) zu schwenken und, dass der hydraulische Empfänger (31) durch den Spannzylinder (37) ausgeführt wird.

## Claims

1. Agricultural haymaking machine (1), specifically a tedder, comprising a chassis (2) resting on the ground (B) by means of at least one wheel (3), the machine (1) being coupled to a tractor (T) able to move it in a direction of advance (A), the machine (1) comprising a carrier (6) bearing a plurality of rotors (7), the carrier (6) being swivel mounted with regard to the chassis (2) around a central pin (13) oriented transversally to the direction of advance (A), each rotor (7) being driven around a respective drive axis (8), the machine (1) comprising a lift actuator (18) articulated to the chassis (2) on one hand and to the carrier (6) on another hand and being able to make the carrier (6) pivot in relation to the chassis (2) around the central pin (13), the machine (1) being able to adopt a headland configuration in which the carrier (6) is raised, as well as a work configuration in which the carrier (6) rests on the ground (B) by means of a support (9), machine (1) wherein the central pin (13) is rigidly attached to the carrier (6), and the machine (1) comprises a positioning actuator (20)
machine **characterized in that** the positioning actuator (20) makes it possible to move the central pin (13) relative to the chassis (2) to change the position of the drive axes (8).

2. Machine according to claim 1, **characterized in that** a control device (15) makes it possible to simultaneously activate the lift actuator (18) and the positioning actuator (20).

3. Machine according to one of claims 1 or 2, **characterized in that** the lift actuator (18) is embodied by at least one jack, that the positioning actuator (20) is embodied by at least one positioning jack (20a) and that a main pipe (25) connects the tractor (T) to a primary pipe (26) connected to the lift actuator (18) and to a secondary pipe (27) connected to the positioning actuator (20).

4. Machine according to one of claims 1 to 3, **characterized in that** pivoting of the carrier (6) around the central pin (13) is free in work configuration and that a locking means (22) keeps the central pin (13) fixed in translation relative to the chassis (2).

5. Machine according to one of claims 1 to 4, **characterized in that** it comprises a sequencing system (28) configured to prevent the carrier (6) from pivoting upward around the central pin (13) when the central (13) pin is in a triggering position or above.

6. Machine according to claim 5, **characterized in that** the sequencing system (28) is configured to prevent the carrier (6) from pivoting upward around the central pin (13) when the central pin (13) is located between its position in work configuration and its triggering position.

7. Machine according to one of claims 1 to 6, **characterized in that** a sliding guide (19) is made in the chassis (2) to guide the motion of the central pin (13) relative to the chassis (2), the lower end of the sliding guide (19) being further away from a straight plane (Q) orthogonal to the direction of advance (A) and located in front of the sliding guide (19) than its upper end.

8. Machine according to claim 7, **characterized in that** the sliding guide (19) is fitted, at its upper end, with a nose (46) pointing forward.

9. Machine according to one of claims 1 to 8, **characterized in that** the lift actuator (18) is connected to the tractor (T) and to a hydraulic receiver (31).

10. Machine according to claim 9, **characterized in that** the carrier (6) comprises a middle segment (16) to which are articulated several lateral segments (17) on either side of the middle segment (16) by means of central pivot axes (38), that at least one tensioning jack (37) enables the lateral segments (17) to pivot relative to the middle segment (16) around the said central pivot axes (38), and that the hydraulic receiver (31) is embodied by the tensioning jack (37).
